(19) Europäisches Patentamt
European Patent Office
Office européen des brevets

(11) EP 0 710 577 B1

# (12) EUROPEAN PATENT SPECIFICATION

(45) Date of publication and mention
of the grant of the patent:
**04.08.1999 Bulletin 1999/31**

(21) Application number: **95918173.6**

(22) Date of filing: **11.05.1995**

(51) Int. Cl.$^6$: **B60C 11/04**

(86) International application number:
**PCT/JP95/00904**

(87) International publication number:
**WO 95/31345 (23.11.1995 Gazette 1995/50)**

(54) **PNEUMATIC RADIAL TIRE**

LUFTREIFEN MIT RADIALER KARKASSE

PNEU A CARCASSE RADIALE

(84) Designated Contracting States:
**DE FR GB IT**

(30) Priority: **13.05.1994 JP 9953494**

(43) Date of publication of application:
**08.05.1996 Bulletin 1996/19**

(73) Proprietor:
**THE YOKOHAMA RUBBER CO., LTD.**
**Tokyo, 105 (JP)**

(72) Inventors:
• **MORISHITA, Hisaya**
**The Yokohama Rubber Co., Ltd.**
**Hiratsuka-shi Kanagawa-ken 254 (JP)**
• **HAZAMA, Hirohisa**
**The Yokohama Rubber Co., Ltd.**
**Hiratsuka-shi Kanagawa-ken 254 (JP)**

• **SUZUKI, Toshihiko**
**The Yokohama Rubber Co., Ltd.**
**Hiratsuka-shi Kanagawa-ken 254 (JP)**

(74) Representative:
**Görg, Klaus, Dipl.-Ing. et al**
**Hoffmann Eitle,**
**Patent- und Rechtsanwälte,**
**Arabellastrasse 4**
**81925 München (DE)**

(56) References cited:
| | |
|---|---|
| EP-A- 0 199 570 | EP-A- 0 493 063 |
| EP-A- 0 590 526 | EP-A- 0 600 177 |
| FR-A- 2 608 516 | JP-A- 3 262 710 |
| JP-A- 58 156 405 | JP-A- 63 235 106 |
| JP-Y- 2 002 641 | US-A- 5 450 885 |

## Description

Technical Field:

This invention relates to a pneumatic radial tire in which the wet performance (draining characteristics) is improved without deteriorating the steering stability, abrasion resistance and noise characteristics on a dry road, and more particularly to a pneumatic radial tire useful for passenger cars.

Background Art:

Since the draining characteristics of a tire for passenger cars deteriorate as a ground contact width of a tread thereof increases due to the flattening of the tire, a tread pattern of excellent draining characteristics has been employed in consideration of the safety of the car in the rain. Such a tread pattern of excellent draining characteristics generally comprises a block pattern having a plurality of straight main grooves formed in a tread surface so as to extend in the circumferential direction of the tire and tire-width-direction lug grooves crossing the straight main grooves.

However, a block pattern provided with a plurality of such straight main grooves and lug grooves has a decreased ground contact area of a tread with respect to a road surface and a decreased rigidity of a tread. Therefore, when a lane is changed during a high-speed travel of a car on a dry road, or when a car is turned in this condition, the steering stability of the car decreases, and, moreover, the abrasion resistance of a tire lowers. Since an increase in the number of the lug grooves causes the number of blocks to increase, the pattern noise increases, and the noise characteristics deteriorate.

A block pattern in which wet performance is provided by forming a single, width-increased, straight main groove in a central region of a tread so as to solve these problems has been proposed. However, it cannot be said in this block pattern that the noise characteristics and abrasion characteristics are improved satisfactorily as expected. Moreover, the large-width main groove formed in the central region of a tread causes the rigidity and ground contact area to decrease, so that the steering stability is not sufficiently improved.

Disclosure of the Invention:

An object of the present invention is to provide a pneumatic radial tire in which the wet performance is improved without causing the steering stability, abrasion resistance and noise characteristics to lower.

The pneumatic radial tire according to the present invention which achieves this object is characterized by the combination of features of independent claim 1.

The "main grooves" referred to in the present invention are grooves having a width of not less than 5 mm. According to the present invention, only two such main grooves having a width $\underline{b}$ of not less than 10 mm, i.e. a large width having the above-mentioned relation with respect to the ground contact-half-width W of a tread surface are provided on both sides of the equator with no other main grooves provided, whereby the draining characteristics of the tire are improved. Since the region lying between these two main grooves is formed as a rib of a high rigidity defined by a/W above, the ground contact pressure of the central region of the tread increases to a high level. Therefore, the steering stability of a car having such tires can be improved as compared with that of a car having conventional tires of this kind in which only one large-width main groove is formed in the central region of a tread for the purpose of improving the wet performance.

Moreover, these effects are secured by setting a distance $\underline{a}$ between the equator and an equator-side edge portion of a main groove and a width $\underline{b}$ of the main groove to levels defined by the above expressions with respect to a ground contact half-width W of a tread surface respectively. Accordingly, it becomes possible to reduce the width of the lug grooves, whereby the noise characteristics and abrasion characteristics can be improved.

The ground contact half-width W of a tread surface referred to in the present invention means 1/2 of a ground contact width of a tread surface measured when a tire contacts a ground surface with 80% of a standard design load at a standard air pressure prescribed in JATMA.

Brief Description of Drawings:

Fig. 1 is a plan view of an example of a tread pattern provided on the pneumatic radial tire according to the present invention;
Fig. 2 is a sectional view of an example of the pneumatic radial tire according to the present invention;
Fig. 3 is an enlarged sectional view of a half of a tread portion of the pneumatic radial tire shown in Fig. 2;

Fig. 4 is an explanatory drawing graphically showing the relation between a/W and wet performance;

Fig. 5 is an explanatory drawing graphically showing the relation between b/W and wet performance;

Fig. 6 is an explanatory drawing graphically showing the relation between a radius of curvature Ra of chamfered portions and steering stability;

Fig. 7 is a plan view showing an example of a tread pattern of a conventional tire; and

Fig. 8 is a plan view showing another example of a tread pattern of a conventional tire.


Best Mode for Carrying Out the Invention:

The present invention will now be described with reference to the embodiments shown in the drawings.

Fig. 7 shows an example of a conventional tread pattern having excellent draining characteristics. In the example of Fig. 7, a plurality of straight main grooves 1 extending in the circumferential direction of a tire, and lug grooves 2 crossing these straight main grooves 1, i.e., extending in the widthwise direction of the tire are provided in a tread surface to form blocks 4. A reference numeral 6 denotes short grooves, and 8 sipes. Arranging straight main grooves 1 and lug grooves 2, which are inclined with respect to the equator C of a tire and cross the straight main grooves 1, in this manner is advantageous for obtaining excellent draining characteristics. However, the lug grooves 2 in the example of Fig. 7 are provided in the central portion as well of the tread surface which is in the vicinity of the equator C, so that the ground contact area (ground contact characteristics) decreases to cause the rigidity of the tread to lower. Consequently, the steering stability decreases, and the abrasion resistance and noise characteristics deteriorate.

Fig. 8 shows another example of a conventional tread pattern having excellent draining characteristics. In the example of Fig. 8, a straight main groove 1 is widened and provided solely in the central region of a tread. In this case, the wet performance, noise characteristics and abrasion characteristics are improved but the ground contact characteristics of the central portion in which the widened straight main groove 1 is provided decreases. Therefore, the steering stability is not sufficiently improved.

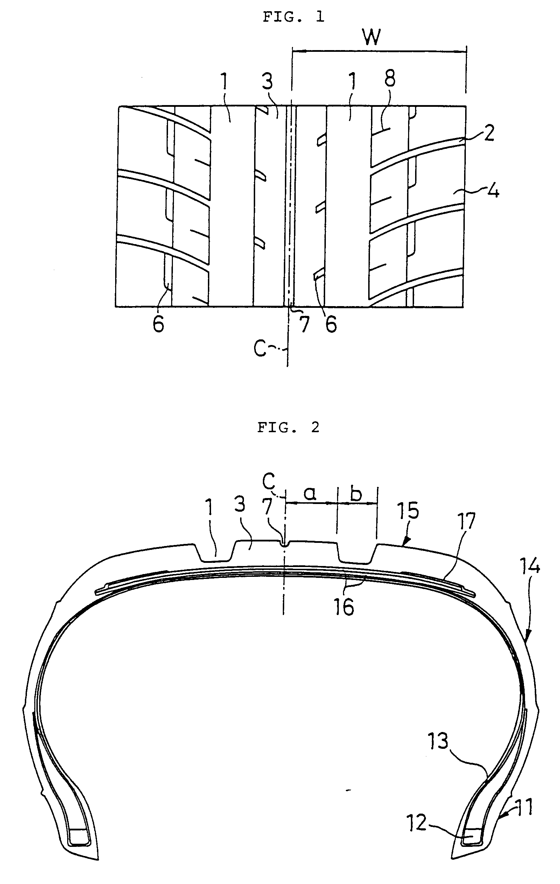

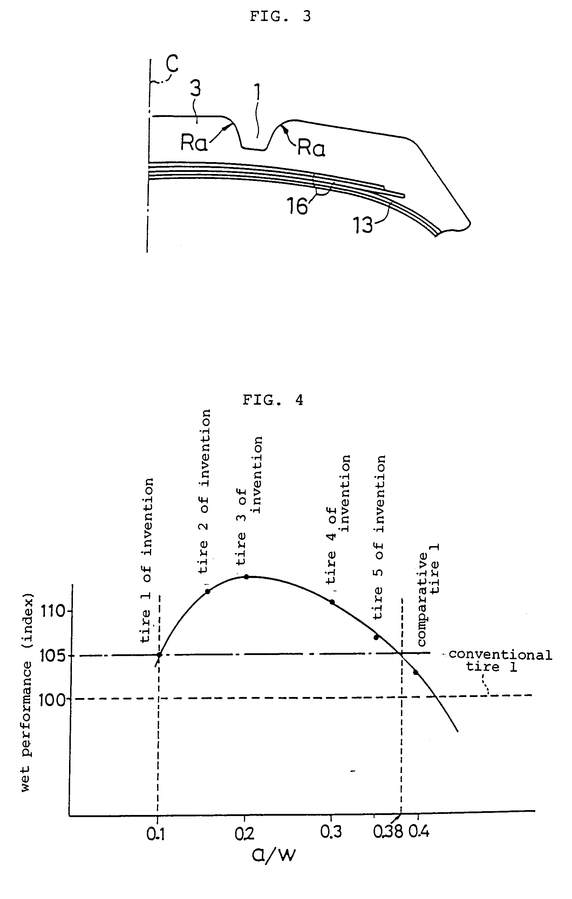

Figs. 1 and 2 show an example of the pneumatic radial tire according to the present invention used as a radial tire for a passenger car, wherein Fig. 1 is a plan view showing a tread pattern thereof; and Fig. 2 a sectional view showing the construction of an inner portion of the tire.

The construction of the inner portion of the tire is substantially identical with that of the inner portion of a conventional pneumatic radial tire. Fig. 2 shows an example of the construction, in which bead portions 11 and side wall portions 14 are joined to the left and right sides of a tread 15, these portions being generally formed to an annular body. A carcass layer 13 inserted in the inner side of the tire has carcass cords comprising organic fiber cords of nylon or polyester and arranged at an angle of 80°-90° with respect to the circumferential direction of the tire. Both end portions of the carcass layer 13 are folded back from the inner sides of the tire to the outer sides thereof around bead cores 12 buried in the bead portions 11.

Two belt layers 16 comprising cords of a high strength and a high elastic modulus, such as steel cords are provided on the outer circumferential side of the carcass layer 13 in the tread portion 15. Belt covering layers 17 in which reinforcing cords, such as nylon cords are arranged substantially in parallel with the circumferential direction of the tire are provided on the outer sides of both end portions of the belt layers 16. The belt covering layers 17 may be provided not only on both end portions of the belt layers 16 but also over the whole width thereof.

The characteristics of the present invention reside in a tread pattern provided on the surface (tread surface) of the tread portion 15, and Fig. 1 shows an example thereof.

The tread surface is provided therein with two straight main grooves 1 the width of which is very much larger than that of a main groove employed in a general pneumatic tire for a passenger car, these main grooves 1 being arranged on the left and right sides of the equator C of the tire. No other grooves defined as main grooves of not less than 5 mm in width then these large-width straight main grooves 1 are provided. Between these two main grooves 1, a large-width rib (center rib) 3 is formed. A straight narrow groove 7 may be provided in the center of this rib 3 so as to extend over the whole circumferential length of the tire. Since this narrow groove 7 has a width of less than 5 mm, it is not included in the main grooves referred to in the present invention.

In the case of the tread pattern of Fig. 1, the two main grooves 1 are provided symmetrically with respect to the equator C of the tire but they may also be provided asymmetrically. The width of the left and right main grooves 1 may be equal as shown in the drawings, and different from each other.

The shoulder portions positioned on the outer sides of the main grooves 1 are provided therein with lug grooves 2 extending in the widthwise direction of the tire. These lug grooves 2 are provided so as to be spaced in the circumferential direction of the tire at an arbitrary pitch, whereby rows of blocks 4 separated from each other by the lug grooves 2 and lined in the circumferential direction of the tire are formed. The blocks 4 may be separated by providing sipes (not shown), which extend in the widthwise direction of the tire, instead of the lug grooves 2, or by providing both the lug grooves 2 and sipes (not shown) extending in the widthwise direction of the tire. The shoulder portions and center rib 3 may be provided as necessary with short grooves 6 and sipes 8 for regulating the rigidity thereof. When the rigidity of the center rib 3 is too high as compared with that of the shoulder portions, uneven abrasion is liable to occur on the center rib 3. In such a case, short grooves 6 and sipes 8 are provided in the center rib 3 so as to reduce the rigidity of the center rib 3. The straight narrow groove 7 in the center of the center rib 7 is also provided for the purpose of regulating the rigidity of the center rib 3.

In the above-mentioned tread pattern, the width $\underline{b}$ of the large-width main grooves 1 is set to not less than 10 mm, and in the range of $0.17 \leqq b/W \leqq 0.25$ with respect to a ground contact half-width W of the tread, and a distance $\underline{a}$ between the equator C of the tire and an equator-side edge portion of a main groove 1 in the range of $0.10 \leqq a/W \leqq 0.38$ with respect to the ground contact half-width W, whereby the width of the rib 3 is specially determined.

Since the width $\underline{b}$ of the large-width main grooves 1 is set to not less than 0.17 times the ground contact half-width W of the tread surface, excellent draining characteristics can be displayed by the two main grooves 1 alone. However, even when the width $\underline{b}$ of the main grooves is increased to a level in excess of 0.25 times the ground contact half-width W, the draining characteristics-improving effect does not increase any more, and, conversely, the steering stability and brasion resistance deteriorate due to a decrease in the ground contact area.

The width of the rib 3 is increased by setting the distance $\underline{a}$ to not less than 0.10 times the ground contact half-width W of the tread surface, whereby a ground contact pressure of the central region (central portion) of the tread is secured. Accordingly, the steering stability is not spoiled as compared with that of a tire in which a large-width main groove 1 designed so as to improve the draining characteristics thereof is provided solely in the central region. However, when the distance $\underline{a}$ is increased to a level in excess of 0.38 times the ground contact half-width W of the tread, the width of the rib 3 in the central region becomes too large, so that the draining characteristics deteriorate. The depth of the main groove 1 may be 66-88% of the thickness of the tread.

Since the draining characteristics of the tire having the above-mentioned tread pattern is improved by only the two large-width main grooves 1, the width of the lug grooves 2 provided as drainage aids in the shoulder portions can be set smaller than that of similar grooves provided in a regular tire. Namely, the width of the grooves 2 can be set to 1.5-5 mm, whereby the noise (pattern noise) can be reduced. The depth of the lug grooves 2 may be set equal to or 80-100% of that of the main grooves 1, which is, for example, 6.5-8.1 mm. When sipes extending in the widthwise direction of the tire are provided instead of the lug grooves 2, or when such sipes are provided together with the lug grooves 2, the width of the sipes may be set to 0.4-1.5 mm. The depth of the siphonic cuts may be 50-80% of that of the main grooves 1.

According to the present invention, the area ratio of the grooves in the tread surface may be set in the same range as that of the grooves in a conventional pneumatic radial tire. It may be set preferably to 25-45%, and more preferably to 30-40%.

The above-mentioned tread pattern according to the present invention has a comparatively low aspect ratio, and can display a remarkable effect when it is applied to a large-width radial tire. The aspect ratio is preferably 35-80%, and more preferably 50-65%.

The ground contact half-width of the tread surface may be set to 40-120 mm, and preferably to 60-120 mm.

As shown in Fig. 3, the main grooves 1 is preferably chamfered arcuately at the edge portions thereof which contact the tread surface. Owing to these chamfered portions, the ground contact area of the tread with respect to a road surface increases during a cornering operation, and this enables the steering stability to be further improved. A radius of curvature Ra of these chamfered portions may preferably be set to 3-10 mm.

Example 1:

Tires 1-5 according to the present invention in which only a ratio (a/W) of a distance $\underline{a}$ between the equator and a main groove to a ground contact half-width W of a tread was set differently to 0.10, 0.15, 0.20, 0.30, 0.35 and a comparative tire 1 in which this ratio only was set to 0.40 were manufactured with the following conditions in the specifications for the tires set in the same manner.

A conventional tire 1 in which the tire size, area ratio of grooves and ground contact half-width W were set in accordance with the following specifications for the tires was manufactured for making comparison standards, except that the width of the main grooves was changed (=6.5 mm) from the width employed in the example of Fig. 7 having four main grooves.

(Specifications for the tires)

Tire size:                     215/65R15
Tread pattern:                 Fig. 1
Area ratio of the grooves:     34%

Ground contact half-width     W: 77 mm

Width b of the main grooves:   16 mm (b/W=0.208)

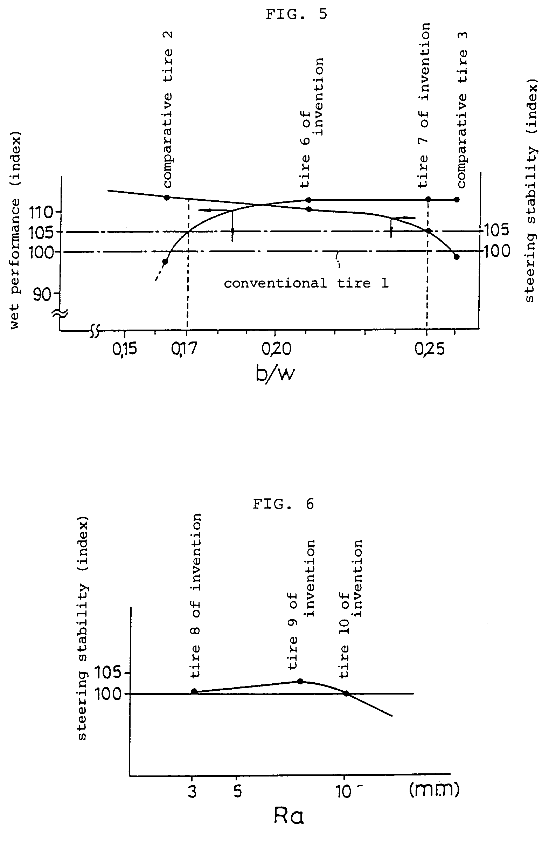

The wet performance of the seven kinds of radial tires mentioned above was evaluated by the following measuring method, and the results are shown in Fig. 4. (Method of determining the wet performance)

A water-sprinkled area having a depth of water of 10 mm was provided in a portion of a circular test course of 100 m in radius, and passenger cars of 2000 cc displacement to which the test tires were attached were made run at a predetermined speed on this test course. The speed was incremented 5 km/h, and lateral acceleration due to a skid of the cars occurring when the cars entered the water-sprinkled area at each speed was measured. A larger lateral acceleration means a larger skid and inferior wet performance.

The evaluation values of wet performance shown in Fig. 4 are shown by reciprocals of total lateral accelerations of the test cars made run five times, and they are turned into indexes based on a base index of 100 which represents the level of wet performance of the conventional tire 1. The larger indexes mean higher wet performance.

It is understood from the results in Fig. 4 that the tread pattern of Fig. 1 readily causes a skid to occur on a wet road surface both when a distance a between the equator of a tire and a main groove is too short, and when the distance a is too long, and that the tires 1-5 according to the present invention in which a/W=0.10-0.38 attains a wet performance index of not less than 105 which has a significant difference from the same index of the conventional tire 1.

Example 2:

Tires 6 and 7 according to the present invention in which only a ratio (b/W) of a width b of the main grooves to a ground contact half-width W was set differently to 0.21 and 0.25 and comparative tires 2 and 3 in which this ratio only was set differently to 0.163 and 0.26 were manufactured with the following conditions in the specifications for the tire set in the same manner.

(Specifications for the tires)

Tire size:                        225/50R16

Tread pattern:                Fig. 1

Ground contact half-width W:     100 mm

Distance a between the equator and a main groove:  20 mm (a/W=0.20)

Regarding these four kinds of radial tires, the wet performance based on the measuring method described in Example 1, and the steering stability on a dry road based on the following measuring method were evaluated, and the results are shown in Fig. 5.

(Method of measuring steering stability)

The test tires of an air pressure of 2.0 kgf/cm$^2$ were set on rims the size of which was 15×6 · 1/2 JJ, and the resultant wheels were attached to passenger cars (4000 cc displacement). These cars were made run by three professional drivers round a one-kilometer test course three times as the lanes were changed, and the ride feeling was evaluated by them. On the basis (100) of an average value of ride evaluation points concerning the conventional tire 1, average values of ride evaluation points concerning the test tires were turned into indexes. The larger indexes show higher steering stability.

It is understood from the results of Fig. 5 that, when the ratio of the width b of the main grooves in the tread pattern of Fig. 1 to the ground contact half-width W of the tread becomes smaller than 0.17, the wet performance thereof cannot be maintained at a high level of the comparative tire 2, i.e. a level of not less than an index of 105 which constitutes a standard showing the presence of a significant difference with respect to the level of wet performance of the conventional tire 1.

When the ratio of the width b of the main grooves to the ground contact half-width W is set to not less than 1.7, the wet performance can be improved to a high level of not less than an index of 105 just as in the tires 6, 7 according to the present invention with respect to that of the conventional tire 1. However, in the comparative tire 3 in which the ratio of the width b of the main grooves to the ground contact half-width W was set as large as 0.26, the ground contact area of the tread becomes extremely small, so that the steering stability cannot be maintained at a level of not less than an index of 105 with respect to that of the conventional tire 1.

Example 3:

A conventional tire 2 having the following specifications was manufactured.

Tire size:                195/65R15
Tread pattern:            Fig. 8
Area ratio of grooves:     36%
Ground contact half width W:  70 mm
Width of main grooves:     26 mm

Regarding this conventional tire 2 and the above-mentioned tire 3 according to the present invention and conventional tire 1, the steering stability the measuring method for which is described in Example 2 and the abrasion resistance the measuring method for which is described below are evaluated to obtain the results shown in Table 1.

(Method of measuring abrasion resistance)

Passenger cars (all the parts of which were accurately aligned) to which the test tires manufactured under the same conditions as those subjected to the above-mentioned steering stability measuring method were attached were made run on a predetermined course. Every time the cars had run 2000 km, the abrasion loss of the tire surfaces and a difference, if any, in the abrasion loss of different parts of the tire were measured. A reciprocal of the result of measurement of the conventional tire 1 was used as a basis (100), and the reciprocals of the results of measurement of these test tires were turned into indexes based on the base index of 100. The larger indexes show higher abrasion resistance.

Table 1

|  | Steering stability (index) | Abrasion resistance (index) |
|---|---|---|
| Tire 3 according to the present invention | 102 | 102 |
| Conventional tire 1 | 100 | 100 |
| Conventional tire 2 | 95 | 93 |

It is understood from Table 1 that both the steering stability and abrasion resistance on a dry road of the tire 3 according to the present invention are higher than those of the conventional tires 1 and 2.

Example 4:

Tires 8, 9, 10 according to the present invention were manufactured to the same construction as the tire 3 according to the present invention manufactured in Example 1, except that the edge portions of the main grooves in the tread surfaces were chamfered arcuately to different radii of curvature Ra of 3 mm, 8 mm and 10 mm respectively.

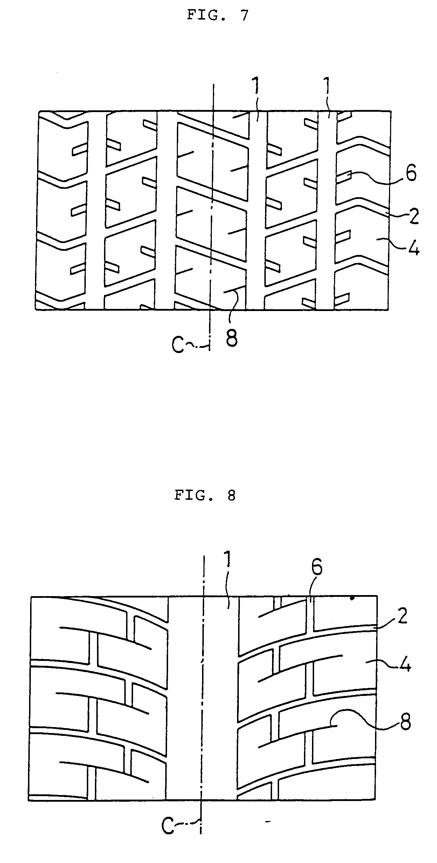

Regarding these three kinds of tires 8, 9, 10 according to the present invention, the steering stability described in Example 2 was evaluated, and the results were turned into indexes based on a base index of 100 which represented the steering stability of the tire 3 according to the present invention. The indexes are shown in Fig. 6.

It is understood from Fig. 6 that the steering stability concerning the tires 8-10 according to the present invention in which the edge portions of the main grooves are chamfered arcuately is improved as compared with that concerning the tire 3 according to the present invention.

According to the present invention, only two large-width main grooves of not less than 10 mm in width _b_ having a specific ratio of the width _b_ to a ground contact half-width W are arranged on both sides of the equator of a tire, so that the draining characteristics of the tire can be improved. Moreover, since a region lying between these two main grooves is formed as a rib of a high rigidity having a specifically set ratio of a/W. Therefore, the central region of the tread has an increased ground contact pressure. This enables the wet performance of the tire to be improved, and also the steering stability to be improved as compared with that of a conventional radial tire in which only one large-width main groove is provided in the central region of a tread thereof. Moreover, since these effects are secured by setting the distance _a_ between the equator of a tire and the equator-side edge portion of a main groove and the width _b_ of the main groove to specific levels with respect to the ground contact half-width W of the tread surface, it becomes possible to set the width of the lug grooves to a low level, and improve the noise characteristics and abrasion characteristics of the tire.

## Claims

1. A pneumatic radial tire wherein two wide main grooves (1) of not less than 10 mm in width are arranged in the portions of a tread surface which are on the left and right sides of an equator (c) of said tire, to define a region (3), which lies between said two main grooves (1), as a rib, lug grooves (2) having a width of 1.5 to 5 mm which extend in the widthwise direction of said tire being arranged in shoulder regions on the outer sides of said main grooves (1) to form rows of blocks (4) in which said blocks are lined in the circumferential direction of said tire, a distance $\underline{a}$ between said equator and an equator-side edge portion of a main groove and a width $\underline{b}$ of said main grooves being set in the following ranges with respect to a ground contact half-width W respectively of a tread surface;

$$0.10 \leq a/W \leq 0.38$$

$$0.17 \leq b/W \leq 0.25$$

2. A pneumatic radial tire according to claim 1, wherein said ground contact half-width W is 40-120 mm.

3. A pneumatic radial tire according to claim 1, wherein a groove area ratio of said tread surface is 25-45 %.

4. A pneumatic radial tire according to claim 1, wherein edge portions of said main grooves which are joined to said tread surface are arcuately chamfered.

5. A pneumatic radial tire according to claim 1, wherein a radius of curvature of said chamfered portions is 3-10 mm.

6. A pneumatic radial tire according to claim 1, wherein an aspect ratio of said tire is 35-80 %.

7. A pneumatic radial tire as claimed in claim 1, characterized in that said lug grooves in the shoulder region on one side and those in the shoulder region on the other side of the equator of the tire are slant in opposite directions relative to the circumferential direction of the tire.

## Patentansprüche

1. Pneumatischer Radialreifen, wobei zwei breite Hauptnuten (1) mit einer Breite von nicht weniger als 10 mm in den Positionen einer Lauffläche angeordnet sind, die auf der linken und rechten Seite eines Äquators (C) des Reifens sind, um einen Bereich (3) zu begrenzen, der zwischen den zwei Hauptnuten (1) als eine Rippe liegt, Stollennuten (2) mit einer Breite von 1,5 bis 5 mm, die sich in der Breitenrichtung des Reifens erstrecken, sind in Schulterbereichen auf den äußeren Seiten der Hauptnuten (1) angeordnet, um Reihen von Blöcken (4) zu bilden, in denen die Blöcke in der Umfangsrichtung des Reifens aufgereiht sind, wobei ein Abstand $\underline{a}$ zwischen dem Äquator und einem äquatorseitigen Kantenbereich einer Hauptnut und eine Breite $\underline{b}$ der Hauptnuten auf die folgenden Bereiche in bezug auf eine Halbbreite W des Bodenkontakts jeweils der Lauffläche eingestellt sind:

$$0,10 \leq a/W \leq 0,38$$

$$0,17 \leq b/W \leq 0,25 \ .$$

2. Pneumatischer Radialreifen gemäß Anspruch 1, wobei die Halbbreite W des Bodenkontakts 40 bis 120 mm ist.

3. Pneumatischer Radialreifen gemäß Anspruch 1, wobei ein Nutflächenverhältnis der Lauffläche 25 bis 45% ist.

4. Pneumatischer Radialreifen gemäß Anspruch 1, wobei Kantenbereiche der Hauptnuten, die mit der Lauffläche verbunden sind, bogenförmig abgeschrägt sind.

5. Pneumatischer Radialreifen gemäß Anspruch 1, wobei ein Krümmungsradius der abgeschrägten Bereiche 3 bis 10 mm ist.

6. Pneumatischer Radialreifen gemäß Anspruch 1, wobei ein Breitenverhältnis des Reifens 35 bis 80% ist.

7. Pneumatischer Radialreifen gemäß Anspruch 1, dadurch gekennzeichnet daß die Stollennuten im Schulterbereich auf einer Seite und jene im Schulterbereich auf der anderen Seite des Äquators des Reifens in entgegengesetzten

# EP 0 710 577 B1

Richtungen relativ zur Umfangsrichtung des Reifens geneigt sind.

**Revendications**

1. Bandage radial pneumatique où deux larges rainures principales (1) d'une largeur non inférieure à 10 mm sont ménagées dans les portion d'une surface de bande de roulement, qui se situent sur les côtés gauche et droit d'un équateur (C) dudit bandage, pour définir une région (3) qui se situe entre deux rainures principales (1), comme une nervure, des rainures de barrette (12) ayant une largeur de 1,5 à 5 mm qui s'étendent dans la direction en largeur dudit bandage étant ménagées dans des régions d'épaulement sur les côtés extérieurs desdites rainures principales (1) pour former des rangées de blocs (4), dans lequel lesdits blocs sont alignés dans la direction circonférentielle dudit bandage, une distance $\underline{a}$ entre ledit équateur et une portion de bord côté équateur d'une rainure principale et une largeur $\underline{b}$ desdites rainures principales étant réglée dans les plages suivantes par rapport à une demi-largeur (W) en contact avec le sol, respectivement, d'une surface de bande de roulement :

$$0,10 \leq a/W \leq 0,38$$

$$0,17 \leq b/W \leq 0,25.$$

2. Bandage radial pneumatique selon la revendication 1, où ladite demi-largeur en contact avec le sol (W) est de 40-120 mm.

3. Bandage radial pneumatique selon la revendication 1, où un rapport de zone de rainure de ladite surface de bande de roulement est de 25-45%.

4. Bandage radial pneumatique selon la revendication 1, où les portions de bord desdites rainures principales qui sont reliées à ladite surface de bande de roulement sont chanfreinées en arc.

5. Bandage radial pneumatique selon la revendication 1, où un rayon de courbure desdites portions chanfreinées est de 3-10 mm.

6. Bandage radial pneumatique selon la revendication 1, où un rapport d'allongement dudit bandage est de 35-80%.

7. Bandage radial pneumatique selon la revendication 1, caractérisé en ce que lesdites rainures de barrette dans la région d'épaulement sur un côté et celles dans la région d'épaulement au côté opposé de l'équateur du bandage sont inclinées dans des directions opposées relativement à la direction circonférentielle du bandage.

8

FIG. 1

FIG. 2

FIG. 3

FIG. 4

FIG. 5

FIG. 6

FIG. 7

FIG. 8